# EUROPEAN PATENT APPLICATION

(11) **EP 4 797 597 A1**
(43) Date of publication of application: **26.08.2026**
(21) Application number: 23955649.1
(22) Date of filing: 16.10.2023
(51) Int. Cl.: H04L 5/00

(54) **INFORMATION TRANSMISSION METHOD, AND DEVICE AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Dehns Germany Partnerschaft mbB
(86) International application number: PCT/CN2023/124835
(87) International publication number: WO 2025/081320

(57) **Abstract**

The present disclosure relates to an information transmission method, and a device and and a storage medium. The method comprises: receiving first information sent by a network device, wherein the first information is used for a terminal device to determine a first artificial intelligence (AI) capability that needs to be reported; on the basis of the first information, determining the first AI capability from second AI capabilities supported by the terminal device; and sending second information to the network device, wherein the second information is used for indicating the first AI capability of the terminal device. Thus, a terminal device can determine, on the basis of first information sent by a network device, a first AI capability needing to be reported, and reports the first AI capability to the network device, that is to say, the terminal device does not need to report all AI capabilities supported by the terminal device, thereby reducing unnecessary AI capability reporting and thus reducing additional signaling overheads.

## Description

### TECHNICAL FIELD

The present disclosure relates to the technical field of communication, and in particular, to an information transmission method and device, and a storage medium.

### BACKGROUND

Machine learning algorithms are one of the most important implementation methods of artificial intelligence (AI) technology. An AI model can be obtained by learning a large amount of training data through machine learning, and events can be predicted through the AI model. In the communication field, a terminal device may report supported AI models to a network device, and obtain prediction data in certain scenarios through the AI models, so as to improve network performance.

### SUMMARY

The embodiments of the present disclosure provide an information transmission method and device, and a storage medium.

According to a first aspect of the embodiments of the present disclosure, an information transmission method is provided, and the method includes:
receiving first information sent by a network device, where the first information is used for a terminal device to determine a first artificial intelligence (AI) capability that needs to be reported;
determining the first AI capability from second AI capabilities supported by the terminal device according to the first information; and
sending second information to the network device, where the second information is used to indicate the first AI capability of the terminal device.

According to a second aspect of the embodiments of the present disclosure, an information transmission method is provided, and the method includes:
sending first information to a terminal device, where the first information is used for the terminal device to determine a first artificial intelligence (AI) capability that needs to be reported; and
receiving second information sent by the terminal device, wherein the second information is used to indicate the first AI capability of the terminal device, and the first AI capability includes an AI capability determined by the terminal device from second AI capabilities supported by the terminal device according to the first information.

According to a third aspect of the embodiments of the present disclosure, an information transmission method is provided, the method includes:
sending, by a network device, first information to a terminal device, where the first information is used for the terminal device to determine a first artificial intelligence (AI) capability to be reported;
determining, by the terminal device, the first AI capability from second AI capabilities supported by the terminal device according to the first information; and
sending, by the terminal device, second information to the network device, where the second information is used to indicate the first AI capability of the terminal device.

According to a fourth aspect of the embodiments of the present disclosure, a terminal device is provided, and the terminal device includes:
a transceiver module, configured to receive first information sent by a network device, where the first information is used for a terminal device to determine a first artificial intelligence (AI) capability that needs to be reported; and
a processing module, configured to determine the first AI capability from second AI capabilities supported by the terminal device according to the first information;
where the transceiver module is further configured to send second information to the network device, and the second information is used to indicate the first AI capability of the terminal device.

According to a fifth aspect of the embodiments of the present disclosure, a network device is provided, and the network device includes:
a transceiver module, configured to send first information to a terminal device, where the first information is used for the terminal device to determine a first artificial intelligence (AI) capability that needs to be reported;
where the transceiver module is further configured to receive second information sent by the terminal device, the second information is used to indicate the first AI capability of the terminal device, and the first AI capability includes an AI capability determined by the terminal device from second AI capabilities supported by the terminal device according to the first information.

According to a sixth aspect of the embodiments of the present disclosure, a communication device is provided, including: one or more processors; where the communication device is configured to execute the optional implementations of the first aspect or the second aspect.

According to a seventh aspect of the embodiments of the present disclosure, a storage medium is provided. The storage medium stores instructions that, when executed on a communication device, cause the communication device to perform the method described in the optional implementations of the first aspect or the second aspect.

The technical solutions provided by the embodiments of the present disclosure may include the following beneficial effects. First information sent by a network device is received, where the first information is used for a terminal device to determine a first artificial intelligence (AI) capability to be reported; the first AI capability is determined from second AI capabilities supported by the terminal device according to the first information; and second information is sent to the network device, where the second information is used to indicate the first AI capability of the terminal device. In this way, the terminal device may determine the first AI capability to be reported according to the first information sent by the network device, and report the first AI capability to the network device. That is to say, the terminal device does not need to report all the AI capabilities supported by the terminal device, which reduces unnecessary reporting of AI capabilities, thereby lowering additional signaling overhead.

It should be understood that the foregoing general description and the following detailed description are exemplary and explanatory only, and are not intended to limit the present disclosure.

### BRIEF DESCRIPTION OF THE DRAWINGS

To more clearly illustrate the technical solutions in the embodiments of the present disclosure, the accompanying drawings required for describing the embodiments are introduced below. The following drawings show merely some embodiments of the present disclosure and do not impose specific limitations on the protection scope of the present disclosure.
FIG. 1 is a schematic diagram of the architecture of a communication system according to an embodiment of the present disclosure.
FIG. 2 is a schematic interaction diagram of an information transmission method according to an embodiment of the present disclosure.
FIG. 3 is a schematic flow diagram of an information transmission method according to an embodiment of the present disclosure.
FIG. 4 is a schematic flow diagram of an information transmission method according to an embodiment of the present disclosure.
FIG. 5A is a schematic structural diagram of a terminal device provided in an embodiment of the present disclosure.
FIG. 5B is a schematic structural diagram of a network device provided in an embodiment of the present disclosure.
FIG. 6A is a schematic structural diagram of a communication device provided in an embodiment of the present disclosure.
FIG. 6B is a schematic structural diagram of a chip provided in an embodiment of the present disclosure.

### DETAILED DESCRIPTION

Embodiments of the present disclosure provide an information transmission method and device, and a storage medium.

In a first aspect, an embodiment of the present disclosure provides an information transmission method, and the method includes:
receiving first information sent by a network device, where the first information is used for a terminal device to determine a first artificial intelligence (AI) capability that needs to be reported;
determining the first AI capability from second AI capabilities supported by the terminal device according to the first information; and
sending second information to the network device, where the second information is used to indicate the first AI capability of the terminal device.

In the above embodiment, the terminal device may determine the first AI capability to be reported according to the first information sent by the network device, and report the first AI capability to the network device. That is, the terminal device does not need to report all AI capabilities supported by the terminal device, which reduces unnecessary reporting of AI capabilities, thereby reducing additional signaling overhead.

With reference to some implementations of the first aspect, in some embodiments, the first information includes at least one of the following:
a frequency band or a frequency band combination;
a usage scenario;
meta information; and
a working condition.

In the above embodiment, the terminal device may determine the first AI capability to be reported according to at least one of the frequency band or frequency band combination, usage scenario, meta information, and working condition indicated by the network device, which improves flexibility of the terminal in reporting AI capabilities.

With reference to some implementations of the first aspect, in some embodiments, the usage scenario includes at least one of the following:
beam management, time-domain beam prediction, spatial-domain beam prediction, channel state information (CSI) compression, positioning, mobility management, selecting a target cell for handover, predicting handover failure, predicting a spatial-domain cell measurement result, predicting a time-domain cell measurement result.

In the above embodiment, the terminal device may determine the first AI capability to be reported according to at least one usage scenario indicated by the network device, so that the terminal device can determine the AI capability to be reported more accurately, thereby further reducing additional signaling overhead.

With reference to some implementations of the first aspect, in some embodiments, the meta information includes at least one of the following:
prediction accuracy, a computation amount for running an AI capability, a storage space required for running an AI capability, a capability identifier of an AI capability, and a provider of an AI capability.

In the above embodiment, the terminal device may determine the first AI capability to be reported according to at least one piece of meta information indicated by the network device, so that the terminal device can determine the AI capability to be reported more accurately, thereby further reducing additional signaling overhead.

With reference to some implementations of the first aspect, in some embodiments, the working condition includes at least one of the following:
a network deployment mode;
a moving speed; and
a radio channel measurement result satisfying a first condition.

In the above embodiment, the terminal device may determine the first AI capability to be reported according to at least one working condition indicated by the network device, so that the terminal device can determine the AI capability to be reported more accurately, thereby further reducing additional signaling overhead.

With reference to some implementations of the first aspect, in some embodiments, the radio channel measurement result includes at least one of the following: reference signal receiving power (RSRP), reference signal receiving quality (RSRQ), signal to interference plus noise ratio (SINR).

In the above embodiment, the terminal device may determine the AI capabilities meeting the working condition through multiple radio channel measurement results, which improves judgment flexibility.

With reference to some implementations of the first aspect, in some embodiments, the first AI capability includes at least one of the following:
an AI capability that can be used in the frequency band or the frequency band combination among the second AI capabilities;
an AI capability that can be used in the usage scenario among the second AI capabilities;
an AI capability matching the meta information among the second AI capabilities; and
an AI capability satisfying the working condition among the second AI capabilities.

In the above embodiment, the first AI capability reported by the terminal device to the network is obtained by matching according to the first information.

With reference to some implementations of the first aspect, in some embodiments, the first AI capability includes a first AI model or a first AI functionality; the second AI capability includes a second AI model or a second AI functionality.

In the above embodiment, the first AI capability reported by the terminal device may include the first AI model or the first AI function, which makes the indication manner of the AI capability more flexible.

With reference to some implementations of the first aspect, in some embodiments, the second information includes a capability identifier of the first AI capability, and the capability identifier includes a model identifier or a functionality identifier.

In the above embodiment, the first AI capability may be indicated through the capability identifier, which makes the indication manner of the AI capability more flexible.

In a second aspect, an embodiment of the present disclosure provides an information transmission method, and the method includes:
sending first information to a terminal device, where the first information is used for the terminal device to determine a first artificial intelligence (AI) capability that needs to be reported;
receiving second information sent by the terminal device, where the second information is used to indicate the first AI capability of the terminal device, and the first AI capability includes an AI capability determined by the terminal device from second AI capabilities supported by the terminal device according to the first information.

With reference to some embodiments of the first aspect, in some embodiments,
the first information includes at least one of the following:
a frequency band or a frequency band combination;
a usage scenario;
meta information; and
a working condition.

With reference to some implementations of the first aspect, in some embodiments, the usage scenario includes at least one of the following:
beam management, time-domain beam prediction, spatial-domain beam prediction, channel state information (CSI) compression, positioning, mobility management, selecting a target cell for handover, predicting handover failure, predicting a spatial-domain cell measurement result, predicting a time-domain cell measurement result.

With reference to some implementations of the second aspect, in some embodiments, the meta information includes at least one of the following:
prediction accuracy, a computation amount for running an AI capability, a storage space required for running an AI capability, a capability identifier of an AI capability, a provider of an AI capability.

With reference to some implementations of the second aspect, in some embodiments, the working condition includes at least one of the following:
a network deployment mode;
a moving speed; and
a radio channel measurement result satisfying a first condition.

With reference to some implementations of the second aspect, in some embodiments, the radio channel measurement result includes at least one of the following: reference signal receiving power (RSRP), reference signal receiving quality (RSRQ), signal to interference plus noise ratio (SINR).

With reference to some implementations of the second aspect, in some embodiments, the first AI capability includes at least one of the following:
an AI capability that can be used in the frequency band or the frequency band combination among the second AI capabilities;
an AI capability that can be used in the usage scenario among the second AI capabilities;
an AI capability matching the meta information among the second AI capabilities; and
an AI capability satisfying the working condition among the second AI capabilities.

With reference to some implementations of the second aspect, in some embodiments, the first AI capability includes a first AI model or a first AI functionality;
the second AI capability includes a second AI model or a second AI functionality.

With reference to some implementations of the second aspect, in some embodiments, the second information includes a capability identifier of the first AI capability, and the capability identifier includes a model identifier or a functionality identifier.

In a third aspect, an embodiment of the present disclosure provides an information transmission method, and the method includes:
sending, by a network device, first information to a terminal device, where the first information is used for the terminal device to determine a first artificial intelligence (AI) capability that needs to be reported;
determining, by the terminal device, the first AI capability from second AI capabilities supported by the terminal device according to the first information; and
sending, by the terminal device, second information to the network device, where the second information is used to indicate the first AI capability of the terminal device.

In a fourth aspect, an embodiment of the present disclosure provides a terminal device. The terminal device may include at least one of a transceiver module and a processing module; where the terminal device is configured to execute the optional implementations of the first aspect.

In a fifth aspect, an embodiment of the present disclosure provides a network device. The network device may include at least one of a transceiver module and a processing module; where the network device is configured to execute the optional implementations of the second aspect.

In a sixth aspect, an embodiment of the present disclosure provides a terminal device, including: one or more processors; where the terminal device is configured to execute the optional implementations of the first aspect.

In a seventh aspect, an embodiment of the present disclosure provides a network device, including: one or more processors; where the network device is configured to execute the optional implementations of the second aspect.

In an eighth aspect, an embodiment of the present disclosure provides a communication system, including: a terminal device and a network device; where the terminal device is configured to perform the method described in the optional implementations of the first aspect, and the network device is configured to perform the method described in the optional implementations of the second aspect.

In a ninth aspect, an embodiment of the present disclosure provides a storage medium. The storage medium stores instructions that, when run on a communication device, cause the communication device to perform the method described in the optional implementations of the first aspect or the second aspect.

In a tenth aspect, an embodiment of the present disclosure provides a program product. The program product, when executed by a communication device, causes the communication device to perform the method described in the optional implementations of the first aspect or the second aspect.

In an eleventh aspect, an embodiment of the present disclosure provides a computer program that, when run on a computer, causes the computer to perform the method described in the optional implementations of the first aspect or the second aspect.

In a twelfth aspect, an embodiment of the present disclosure provides a chip or a chip system. The chip or chip system includes a processing circuit configured to perform the method described in the optional implementations of the first aspect or the second aspect.

It may be understood that the above network device, terminal device, communication device, communication system, storage medium, program product, computer program, and chip or chip system may be configured to perform the method provided by the embodiments of the present disclosure. Therefore, for the beneficial effects that can be achieved, reference may be made to the beneficial effects in the corresponding method, which are not repeated here.

The embodiments of the present disclosure provide an information transmission method and device, and a storage medium. In some embodiments, terms such as information transmission method, information processing method, and communication method may be used interchangeably; terms such as information transmission apparatus, information processing apparatus, communication apparatus, and communication device may be used interchangeably; terms such as information transmission system and communication system may be used interchangeably.

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined. In addition, the various embodiments may be arbitrarily combined. For example, some or all steps of different embodiments may be arbitrarily combined, and a certain embodiment may be arbitrarily combined with the optional implementation manners of other embodiments.

In various embodiments of the present disclosure, unless otherwise specified or existing logical contradictions, the terms and/or descriptions between the various embodiments are consistent and can be referred to each other. The technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "the above-mentioned", "said", "the aforesaid", "this", etc., may mean "one and only one", and may also mean "one or more", "at least one", etc. For example, when articles such as "a", "an" and "the" in English are used in translation, the noun following the article may be understood as a singular expression or a plural expression.

In the embodiments of the present disclosure, "plurality" refers to two or more.

In some embodiments, the terms "at least one of", "one or more", "a plurality of", "multiple", etc., may be used interchangeably.

In some embodiments, expressions like "at least one of A and B", "A and/or B", "A in one case and B in another case", and "in response to case A and in response to another case B" may include the following technical solutions depending on the situation: in some embodiments, A (executing A independently of B); in some embodiments, B (executing B independently of A); in some embodiments, execution is selected from A and B (A and B are optionally executed); in some embodiments, A and B (both A and B are executed). The same applies when there are more alternatives such as A, B, and C.

In some embodiments, expressions such as "A or B" may include the following technical solutions depending on the situation: in some embodiments, A (executing A independently of B); in some embodiments, B (executing B independently of A); in some embodiments, execution is selected from A and B (A and B are optionally executed). The same applies when there are more alternatives such as A, B, and C.

In the embodiments of the present disclosure, prefixes such as "first" and "second" are only used to distinguish different described objects, and do not constitute any restriction on the position, order, priority, quantity, content, or other aspects of the described objects. For statements about the described objects, reference shall be made to the descriptions in the context of the claims or the embodiments, and no redundant limitation shall be constituted due to the use of these prefixes. For example, if the described object is a "field", the ordinal numbers before "field" in "first field" and "second field" do not limit the position or order between the "fields"; "first" and "second" do not restrict whether the "fields" they modify are in the same message, nor do they limit the sequence order between the "first field" and the "second field". For another example, if the described object is a "level", the ordinal numbers before the "level" in "first level" and "second level" do not limit the priority between the "levels". For yet another example, the quantity of the described object is not limited by the ordinal number, and may be one or more. Taking the "first apparatus" as an example, the quantity of the "apparatus" therein may be one or more. In addition, objects modified by different prefixes may be the same or different. For instance, if the described object is an "apparatus", the "first apparatus" and the "second apparatus" may be the same apparatus or different apparatuses, and their types may be the same or different; for another example: if the described object is "information", the "first information" and the "second information" may be the same information or different information, and their contents may be the same or different.

In some embodiments, expressions such as "including A", "containing A", "used to indicate A", and "carrying A" can be interpreted as directly carrying A, and can also be interpreted as indirectly indicating A.

In some embodiments, terms such as " in response to...", "in response to determining that...", "in the case of...", "when...", "in the case that...", "if...", and "in the event that...", etc., may be used interchangeably.

In some embodiments, terms such as "greater than", "greater than or equal to", "not less than", "more than", "more than or equal to", "no less than", "higher than", "higher than or equal to", "not lower than", and "above" may be replaced with one another; terms such as "less than", "less than or equal to", "not greater than", "fewer than", "fewer than or equal to", "no more than", "lower than", "lower than or equal to", "not higher than", and "below" may be replaced with one another.

In some embodiments, terms such as "apparatus" may be interpreted as either physical or virtual entities, and their names are not limited to those recorded in the embodiments. Terms including "apparatus", "equipment", "device", "circuit", "network function", "node", "function", "unit", "section", "system", "network", "chip", "chip system", "entity", and "subject" may be used interchangeably.

In some embodiments, "network" may be interpreted as apparatuses included in a network (e.g., access network devices, core network devices, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" may be used interchangeably.

In some embodiments, an access network device, a core network device, or a network device may be replaced with a terminal. For example, the various embodiments of the present disclosure may also be applied to a structure in which the communication between an access network device, a core network device, or a network device and a terminal is replaced with communication between multiple terminals (for example, this may also be referred to as device-to-device (D2D), vehicle-to-everything (V2X), etc.). In this case, a structure in which the terminal has all or part of the functions of the access network device may also be adopted. In addition, terms such as "uplink" and "downlink" may also be replaced with terms corresponding to inter-terminal communication (for example, "side"). For example, the uplink channel, the downlink channel, etc., may be replaced with a side channel, and the uplink, the downlink, etc., may be replaced with a sidelink.

In some embodiments, a terminal may be replaced with an access network device, a core network device, or a network device. In this case, a structure may also be adopted in which the access network device, the core network device, or the network device has all or part of the functions of a terminal.

In some embodiments, obtaining data, information, etc., may comply with the laws and regulations of the country where it is obtained.

In some embodiments, data, information, etc., may be obtained after acquiring the user's consent.

In addition, each element, each row, or each column in the tables of the embodiments of the present disclosure may be implemented as an independent embodiment, and any combination of any element, any row, or any column may also be implemented as an independent embodiment.

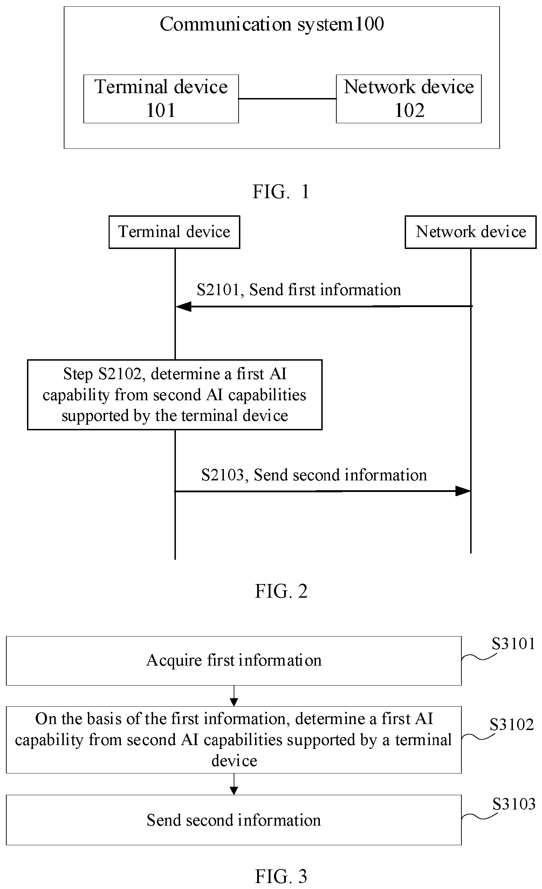

FIG. 1 is a schematic diagram of the architecture of a communication system according to an embodiment of the present disclosure. As shown in FIG. 1, the communication system 100 may include a terminal device 101 and a network device 102.

In some embodiments, the terminal 101 includes, for example, at least one of a mobile phone, a wearable device, an Internet of Things (IoT) device, a vehicle with communication functionality, an intelligent vehicle, a tablet computer (Pad), a computer with wireless transceiving functionality, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include at least one of an access network device and a core network device.

In some embodiments, an access network device is, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open radio access network(Open RAN), a cloud radio access network (Cloud RAN), a base station in other communication systems, and an access node in a wireless fidelity (WiFi) system, but is not limited thereto.

In some embodiments, the technical solutions of the present disclosure may be applied to the Open RAN architecture. In this case, the interfaces between access network devices or within an access network device involved in the embodiments of the present disclosure may become internal interfaces of the Open RAN, and the processes and information exchange between these internal interfaces can be implemented through software or programs.

In some embodiments, an access network device may be composed of a central unit (CU) and distributed units (DUs). The CU may also be referred to as a control unit. The adoption of the CU-DU structure may split the protocol layers of the access network device, with functions of some protocol layers being placed in the CU for centralized control, and the functions of the remaining part or all of the protocol layers being distributed in the DUs, which are centrally controlled by the CU, but is not limited thereto.

In some embodiments, the core network device may be one device, or multiple devices or a device cluster. The core network may include at least one of an evolved packet core (EPC), a 5G core network (5GCN), and a next generation core (NGC).

It can be understood that the communication system described in the embodiments of the present disclosure is intended to more clearly illustrate the technical solutions of the embodiments of the present disclosure, and does not constitute a limitation on the technical solutions provided by the embodiments of the present disclosure. One of ordinary skills in the art can know that, with the evolution of system architectures and the emergence of new service scenarios, the technical solutions provided by the embodiments of the present disclosure are also applicable to similar technical problems.

The following embodiments of the present disclosure may be applied to the communication system 100 shown in FIG. 1, or some entities thereof, but are not limited thereto. The various entities shown in FIG. 1 are illustrative only. The communication system may include all or part of the entities in FIG. 1, and may also include other entities not shown in FIG. 1. The numbers and forms of various entities are arbitrary. The connection relationships between the entities are illustrative only. The entities may be unconnected or connected, and the connection may be in any manner, which may be a direct connection or an indirect connection, a wired connection or a wireless connection.

Various embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G New Radio (NR), Future Radio Access (FRA), New-Radio Access Technology (New-RAT), New Radio (NR), New Radio Access (NX), Future Generation Radio Access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wide Band (UWB), Bluetooth (registered trademark), Public Land Mobile Network (PLMN), Device-to-Device (D2D) systems, Machine-to-Machine (M2M) systems, Internet of Things (IoT) systems, Vehicle-to-Everything (V2X), systems using other communication methods, next-generation systems extended based on these, etc. In addition, multiple systems (for example, a combination of LTE or LTE-A and 5G, etc.) may also be combined for application.

In a communication system, a network device needs to know the capabilities of a terminal device so as to configure functions and features supportable by the terminal device. A terminal device may support numerous frequency bands and frequency band combinations, while a network device may support a limited number of frequency bands and frequency band combinations. To reduce signaling overhead for capability reporting by the terminal device, the network device may send a UECapabilityEnquiry to the terminal device. The UECapabilityEnquiry may indicate an access technology type, which may include NR, Evolved Universal Terrestrial Radio Access (eUTRA), and eUTRA-NR. The UE Capability Enquiry may further indicate a frequency band/frequency band combination. The terminal device may report a corresponding access technology type and a frequency band/frequency band combination by using UECapabilityInformation.

In a beam management procedure, the terminal device may reduce the number of beams to be measured, and the terminal device or the network device may obtain an optimal beam through AI inference. Beam prediction includes time-domain beam prediction and spatial-domain beam prediction. In spatial-domain beam prediction, the terminal device measures a small number of beams and predicts measurement results of other beams. In time-domain beam prediction, the terminal device predicts future beam measurement results according to historical beam measurement results.

In a Channel State Information (CSI) reporting procedure, the terminal device may compress CSI measurement results by using AI, report the compressed CSI measurement results to the network device, and restore the original CSI measurement results by using AI after reception, thereby reducing the number of signaling bits required in the reporting process.

In a positioning procedure, the terminal device may predict an accurate position according to limited measurement results.

In a mobility procedure, the terminal device may use AI capabilities in any of the following scenarios:
selecting a target cell for handover, i.e., using AI to select a target cell with optimal performance for handover;
predicting whether a handover failure will occur in the future, i.e., predicting whether a handover to a certain target cell will fail;
predicting spatial-domain cell measurement results, where the terminal device predicts measurement results of one cell according to measurement results of another cell; and
predicting time-domain cell measurement results, where the terminal device predicts future cell measurement results according to historical cell measurement results.

In AI usage and inference, multiple AI models or AI functionalities may be required for inference and prediction. Due to limited computing power and storage, a terminal device may only support specific AI models or AI functionalities. A network device may send an indication to the terminal device to indicate an AI model or AI functionality to be used by the terminal device, including activation of an AI model or AI functionality, deactivation of an AI model or AI functionality, and switching of an AI model or AI functionality. The terminal device may report AI models or functionalities supported thereby to the network device.

Each AI model corresponds to one identifier, and each AI model may be identified by a set of meta data including performance, architecture, parameters, identifier, application scenario, working condition, etc.

An AI model used by a terminal device may be provided by a third-party provider, and each provider is identified by one identifier.

An AI functionality is a collection of AI models and may be used for a specific function.

An AI model or AI functionality can only work under specific working conditions, and the working conditions may include a network deployment mode (indoor or outdoor), UE speed (which may be determined by a speed or moving state of the UE), and channel quality (which may be determined by RSRP).

In some embodiments, a terminal device needs to report supported AI models or AI functionalities to a network device. The terminal device may support multiple AI models or AI functionalities, but the network device may not allow the terminal device to use all the AI models or AI functionalities. In this case, reporting, by the terminal device, AI models or AI functionalities unused by the network device will cause additional signaling overhead.

FIG. 2 is a schematic interaction diagram of an information transmission method according to an embodiment of the present disclosure. The method may be performed by the above communication system. As shown in FIG. 2, the method may include the following steps.

In step S2101, a network device sends first information to a terminal device.

In some embodiments, the terminal device may receive the first information. For example, the terminal device may receive the first information sent by the network device. For another example, the terminal device may also receive the first information sent by another entity.

In some embodiments, the first information may be used by the terminal device to determine a first artificial intelligence (AI) capability that needs to be reported.

In some embodiments, the first AI capability includes a first AI model or a first AI functionality.

In some embodiments, the first AI functionality may be implemented by one AI model or by multiple AI models in cooperation.

In some embodiments, the first AI capability may be one or more AI capabilities supported by the terminal device.

In some embodiments, the first information includes at least one of the following: a frequency band or frequency band combination; a usage scenario; meta information; and a working condition.

In some embodiments, the usage scenario is used to indicate a scenario in which the first AI capability is used.

In some embodiments, the usage scenario includes at least one of the following: beam management, time-domain beam prediction, spatial-domain beam prediction, channel state information (CSI) compression, positioning, mobility management, selecting a target cell for handover, predicting handover failure, predicting a spatial-domain cell measurement result, predicting a time-domain cell measurement result.

In some embodiments, the meta information includes at least one of the following: prediction accuracy, a computation amount for running an AI capability, a storage space required for running an AI capability, a capability identifier of an AI capability, a provider of an AI capability.

In some embodiments, the prediction accuracy may be prediction accuracy of an AI capability.

In some embodiments, the computation amount for running an AI capability may be interpreted as a computation amount to be completed by the terminal device during running of the AI capability.

In an implementation manner, the computation amount may be indicated by Floating-point operations per second (FLOPS).

In some embodiments, the storage space required for running an AI capability may be interpreted as a storage space required by the terminal device during running of the AI capability.

In an implementation manner, the storage space may be indicated by KB.

In some embodiments, the capability identifier of an AI capability includes a model identifier or a functionality identifier.

In some embodiments, the provider of an AI capability may be indicated by an identifier of the provider.

In some embodiments, the working condition includes at least one of the following: a network deployment mode; a moving speed; and a radio channel measurement result satisfying a first condition.

In some embodiments, the first condition may be measured by a threshold.

For example, if the radio channel measurement result is greater than a first threshold or the radio channel measurement result is less than a second threshold, it is determined that the radio channel measurement result meets the first condition.

In some embodiments, the network deployment mode may include indoor, outdoor, macro cell, micro cell, etc.

In some embodiments, the moving speed may be interpreted as a moving speed of the terminal device when using an AI capability.

In some embodiments, the radio channel measurement result includes at least one of the following: Reference Signal Receiving Power (RSRP), Reference Signal Receiving Quality (RSRQ), Signal to Interference plus Noise Ratio (SINR).

In some embodiments, the first AI capability includes at least one of the following:
an AI capability that can be used in the frequency band or frequency band combination among the second AI capabilities;
an AI capability that can be used in the usage scenario among the second AI capabilities;
an AI capability matching the meta information among the second AI capabilities; and
an AI capability satisfying the working condition among the second AI capabilities.

In some embodiments, a name of the first information is not limited, and for example, may be a "message carrying a frequency band/frequency band combination", a "message carrying a usage scenario", "signaling or data carrying meta information", a "message carrying a working condition", etc.

In step S2102, the terminal device determines a first AI capability from second AI capabilities supported by the terminal device according to the first information.

In some embodiments, the second AI capabilities may include all AI capabilities supported by the terminal device.

In some embodiments, the second AI capabilities include a second AI model or a second AI functionality.

In some embodiments, the second AI functionality may be implemented by one AI model or by multiple AI models in cooperation.

In some embodiments, when determining that the first information includes a frequency band or a frequency band combination, the terminal device may determine an AI capability usable in the frequency band and frequency band combination among the second AI capabilities as the first AI capability.

In some embodiments, when determining that the first information includes a usage scenario, the terminal device may determine an AI capability usable in the usage scenario among the second AI capabilities as the first AI capability.

In an implementation manner, if the usage scenario includes beam management, the terminal device may determine an AI capability configured to perform beam management among the second AI capabilities as the first AI capability.

In another implementation manner, if the usage scenario includes time-domain beam prediction, the terminal device may determine an AI capability configured to perform time-domain beam prediction among the second AI capabilities as the first AI capability.

In another implementation manner, if the usage scenario includes spatial-domain beam prediction, the terminal device may determine an AI capability configured to perform spatial-domain beam prediction among the second AI capabilities as the first AI capability.

In another implementation manner, if the usage scenario includes CSI compression, the terminal device may determine an AI capability configured to perform CSI compression among the second AI capabilities as the first AI capability.

In another implementation manner, if the usage scenario includes positioning, the terminal device may determine an AI capability configured to perform a positioning operation among the second AI capabilities as the first AI capability.

In another implementation manner, if the usage scenario includes mobility management, the terminal device may determine an AI capability configured to perform mobility management among the second AI capabilities as the first AI capability.

In another implementation manner, if the usage scenario includes selecting a target cell for handover, the terminal device may determine an AI capability configured to select a target cell for handover among the second AI capabilities as the first AI capability.

In another implementation manner, if the usage scenario includes predicting handover failure, the terminal device may determine an AI capability configured to predict handover failure among the second AI capabilities as the first AI capability.

In another implementation manner, if the usage scenario includes predicting a spatial-domain cell measurement result, the terminal device may determine an AI capability configured to predict a spatial-domain cell measurement result among the second AI capabilities as the first AI capability.

In another implementation manner, if the usage scenario includes predicting a time-domain cell measurement result, the terminal device may determine an AI capability configured to predict a time-domain cell measurement result among the second AI capabilities as the first AI capability.

It should be noted that if the usage scenario includes multiple items, the terminal device may determine the first AI capability from the second AI capabilities according to the multiple usage scenarios.

For example, if the usage scenario includes beam management and CSI compression, the terminal device may determine an AI capability configured for beam management and CSI compression among the second AI capabilities as the first AI capability.

In some embodiments, when determining that the first information includes meta information, the terminal device may determine an AI capability matching the meta information among the second AI capabilities as the first AI capability.

In an implementation manner, if the meta information includes prediction accuracy, the terminal device may determine an AI capability satisfying the prediction accuracy among the second AI capabilities as the first AI capability.

For example, if the prediction accuracy is 98%, the terminal device may determine an AI capability with prediction accuracy greater than or equal to 98% among the second AI capabilities as the first AI capability.

In another implementation manner, if the meta information includes a computation amount for running an AI capability, the terminal device may determine an AI capability satisfying the computation amount among the second AI capabilities as the first AI capability.

For example, if the computation amount for running an AI capability is indicated by FLOP, the terminal device may determine an AI capability with a computation amount for running the second AI capability greater than or equal to the indicated FLOP, as the first AI capability, among the second AI capabilities.

In another implementation manner, if the meta information includes a storage space required for running an AI capability, the terminal device may determine an AI capability satisfying the storage space among the second AI capabilities as the first AI capability.

For example, if the storage space for running an AI capability is m KB, the terminal device may determine an AI capability with a storage space required for running the second AI capability greater than or equal to m KB, as the first AI capability, among the second AI capabilities.

In another implementation manner, if the meta information includes a capability identifier of an AI capability, the terminal device may determine, from the second AI capabilities, an AI capability corresponding to the capability identifier as the first AI capability.

In another implementation manner, if the meta information includes a provider of an AI capability, the terminal device may determine an AI capability provided by the provider among the second AI capabilities as the first AI capability.

It should be noted that if the meta information includes multiple items, the terminal device may determine the first AI capability from the second AI capabilities according to the multiple items of meta information.

For example, if the meta information includes prediction accuracy, a computation amount for running an AI capability, and a storage space required for running an AI capability, the terminal device may determine an AI capability simultaneously satisfying the prediction accuracy, the computation amount, and the storage space among the second AI capabilities as the first AI capability.

In some embodiments, when determining that the first information includes a working condition, the terminal device may determine an AI capability satisfying the working condition among the second AI capabilities as the first AI capability.

In an implementation manner, if the working condition includes a network deployment mode, the terminal device may determine an AI capability matching the network deployment mode among the second AI capabilities as the first AI capability.

For example, if the network deployment mode is indoor, the terminal device may determine an AI capability working indoors among the second AI capabilities as the first AI capability.

In another implementation manner, if the working condition includes a moving speed, the terminal device may determine an AI capability satisfying the moving speed among the second AI capabilities as the first AI capability.

For example, if the moving speed is m km/h, the terminal device may determine an AI capability working at a moving speed greater than or equal to m km/h among the second AI capabilities as the first AI capability.

In another implementation manner, if the working condition includes a radio channel measurement result satisfying a first condition, the terminal device may determine an AI capability for which a radio channel measurement result when the second AI capability is enabled satisfies the first condition, as the first AI capability, among the second AI capabilities.

It should be noted that if the working condition includes multiple items, the terminal device may determine the first AI capability from the second AI capabilities according to the multiple working conditions.

For example, if the working condition includes a network deployment mode and a moving speed, the terminal device may determine an AI capability simultaneously satisfying the network deployment mode and the moving speed among the second AI capabilities as the first AI capability.

It should be also noted that the terminal device may determine the first AI capability by combining multiple implementation manners in the above embodiments according to specific content included in the first information, which is not limited in the embodiments of the present disclosure.

In step S2103, the terminal device sends second information to the network device.

In some embodiments, the network device may receive the second information. For example, the network device may receive the second information sent by the terminal device. For another example, the network device may also receive the second information sent by another entity.

In some embodiments, the second information is used to indicate the first AI capability of the terminal device.

In some embodiments, the second information includes a capability identifier of the first AI capability, and the capability identifier includes a model identifier or a functionality identifier.

In some embodiments, a name of the second information is not limited, and for example, may be a "message carrying an AI capability", a "message carrying an AI capability identifier", "signaling or data carrying an AI capability", "signaling or data carrying an AI capability identifier", etc.

The method involved in the embodiment of the present disclosure may include at least one of the above steps S2101 to S2103. For example, step S2101 may be performed as a standalone embodiment, step S2103 may be performed as a standalone embodiment, steps S2101 + S2102 may be performed as a standalone embodiment, and steps S2102 + S2103 may be performed as a standalone embodiment, but are not limited thereto.

In some embodiments, all the above steps S2101 to S2103 are optional steps. For example, steps S2101 and S2103 are optional, and one or more of these steps may be omitted or replaced in different embodiments.

In some embodiments, reference may be made to other optional implementations described before or after the specification corresponding to FIG. 2.

By adopting the above method, first information sent by a network device is received, where the first information is used by a terminal device to determine a first artificial intelligence (AI) capability that needs to be reported; the first AI capability is determined from second AI capabilities supported by the terminal device according to the first information; and second information is sent to the network device, where the second information is used to indicate the first AI capability of the terminal device. In this way, the terminal device may determine the first AI capability to be reported according to the first information sent by the network device, and report the first AI capability to the network device. That is to say, the terminal device does not need to report all AI capabilities supported thereby, which reduces unnecessary reporting of AI capabilities, thereby lowering additional signaling overhead.

In some embodiments, names of information and the like are not limited to those recorded in the embodiments, and terms such as "information", "message", "signal", "signaling", "report", "configuration", "indication", "instruction", "command", "channel", "parameter", "field", "symbol", "codeword", "codepoint", "bit", "data", "program", and "chip" may be used interchangeably.

In some embodiments, the terms "obtain", "acquire", "receive", "transmit", "transmit in both directions", and "send and/or receive" may be replaced with each other, and may be interpreted as receiving from another entity, obtaining from a protocol, obtaining from a higher layer, obtaining through self-processing, autonomous implementation, and other meanings.

In some embodiments, terms such as "send", "transmit", "report", "deliver", "transmit", "transmit in both directions", and "send and/or receive" may be used interchangeably.

In some embodiments, "certain", "preset", "pre-configured", "set", "indicated", "a certain", "arbitrary", "first" and the like may be replaced with each other, and "certain A", "preset A", "pre-configured A", "set A", "indicated A", "a certain A", "arbitrary A", and "first A" may be interpreted as A pre-specified in a protocol or the like, or A obtained through setting, configuration, or indication, or a certain A, a certain A, an arbitrary A, or a first A, etc., but are not limited thereto.

In some embodiments, terms "obtain", "acquire", "receive", "transmit", "transmit in both directions", and "send and/or receive" may be replaced with each other, and may be interpreted as receiving from another entity, obtaining from a protocol, obtaining from a higher layer, obtaining through self-processing, autonomous implementation, and other meanings.

In some embodiments, terms such as "send", "transmit", "report", "deliver", "transmit", "transmit in both directions", and "send and/or receive" may be used interchangeably.

FIG. 3 is a schematic flow diagram of an information transmission method according to an embodiment of the present disclosure. As shown in FIG. 3, an embodiment of the present disclosure relates to an information transmission method, and the method may be performed by a terminal device. The method may include the following steps.

In step S3101, first information is obtained.

For optional implementations of step S3101, reference may be made to optional implementations of step S2101 in FIG. 2 and other relevant parts in the embodiments related to FIG. 2, which will not be repeated herein.

In some embodiments, the terminal device may receive the first information sent by a network device, but is not limited thereto, and the terminal device may also receive the first information sent by another entity.

In some embodiments, the terminal device may obtain the first information specified by a protocol.

In some embodiments, the terminal device may obtain the first information from the upper layer(s).

In some embodiments, the terminal device may perform processing to obtain the first information.

In some embodiments, step S3101 may be omitted, and the terminal device may autonomously implement a function indicated by the first information, or the above function is default or implicit.

In step S3102, a first AI capability is determined from second AI capabilities supported by the terminal device according to the first information.

For optional implementations of step S3102, reference may be made to optional implementations of step S2102 in FIG. 2 and other relevant parts in the embodiments related to FIG. 2, which will not be repeated herein.

In step S 3103, second information is sent.

For optional implementations of step S3103, reference may be made to optional implementations of step S2103 in FIG. 2 and other relevant parts in the embodiments related to FIG. 2, which will not be repeated herein.

In some embodiments, the terminal device may send the second information to the network device, but is not limited thereto, and the terminal device may also send the second information to another entity.

The method involved in the embodiment of the present disclosure may include at least one of the above steps S3101 to S3103. For example, step S3101 may be performed as a standalone embodiment, step S3103 may be performed as a standalone embodiment, steps S3101 + S3102 may be performed as a standalone embodiment, and steps S3102 + S3103 may be performed as a standalone embodiment, but are not limited thereto.

In some embodiments, all the above steps S3101 to S3103 are optional steps. For example, steps S3101 and S3103 are optional, and one or more of these steps may be omitted or replaced in different embodiments.

In some embodiments, the first information includes at least one of the following:
a frequency band or a frequency band combination;
a usage scenario;
meta information; and
a working condition.

In some embodiments, the usage scenario includes at least one of the following:
beam management, time-domain beam prediction, spatial-domain beam prediction, channel state information (CSI) compression, positioning, mobility management, selecting a target cell for handover, predicting handover failure, predicting a spatial-domain cell measurement result, and predicting a time-domain cell measurement result.

In some embodiments, the meta information includes at least one of the following:
prediction accuracy, a computation amount for running an AI capability, a storage space required for running an AI capability, a capability identifier of an AI capability, and a provider of an AI capability.

In some embodiments, the working condition includes at least one of the following:
a network deployment mode;
a moving speed; and
a radio channel measurement result satisfying a first condition.

In some embodiments, the radio channel measurement result includes at least one of the following: reference signal receiving power (RSRP), reference signal receiving quality (RSRQ), and signal to interference plus noise ratio (SINR).

In some embodiments, the first AI capability includes at least one of the following:
an AI capability that can be used in the frequency band or the frequency band combination among the second AI capabilities;
an AI capability that can be used in the usage scenario among the second AI capabilities;
an AI capability matching the meta information among the second AI capabilities; and
an AI capability satisfying the working condition among the second AI capabilities.

In some embodiments, the first AI capability includes a first AI model or a first AI functionality; the second AI capability includes a second AI model or a second AI functionality.

In some embodiments, the second information includes a capability identifier of the first AI capability, and the capability identifier includes a model identifier or a functionality identifier.

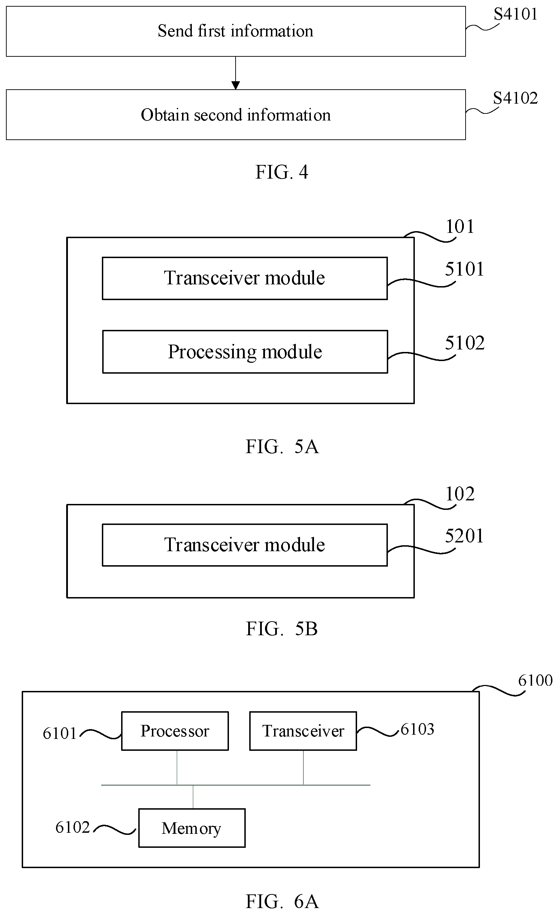

FIG. 4 is a schematic flow diagram of an information transmission method according to an embodiment of the present disclosure. As shown in FIG. 4, an embodiment of the present disclosure relates to an information transmission method, and the method may be performed by a network device. The method may include the following steps.

In step S 4101, first information is sent.

For optional implementations of step S4101, reference may be made to optional implementations of step S2101 in FIG. 2 and other relevant parts in the embodiments related to FIG. 2, which will not be repeated herein.

In some embodiments, the network device may send the first information to a terminal device, but is not limited thereto, and the network device may also send the first information to another entity.

In step S 4102, second information is obtained.

For optional implementations of step S4102, reference may be made to optional implementations of step S2103 in FIG. 2 and other relevant parts in the embodiments related to FIG. 2, which will not be repeated herein.

In some embodiments, the network device may receive the second information sent by the terminal device, but is not limited thereto, and the terminal device may also receive the second information sent by another entity.

In some embodiments, the first information includes at least one of the following:
a frequency band or a frequency band combination;
a usage scenario;
meta information; and
a working condition.

In some embodiments, the usage scenario includes at least one of the following:
beam management, time-domain beam prediction, spatial-domain beam prediction, channel state information (CSI) compression, positioning, mobility management, selecting a target cell for handover, predicting handover failure, predicting a spatial-domain cell measurement result, and predicting a time-domain cell measurement result.

In some embodiments, the meta information includes at least one of the following:
prediction accuracy, a computation amount for running an AI capability, a storage space required for running an AI capability, a capability identifier of an AI capability, and a provider of an AI capability.

In some embodiments, the working condition includes at least one of the following:
a network deployment mode;
a moving speed; and
a radio channel measurement result satisfying a first condition.

In some embodiments, the radio channel measurement result includes at least one of the following: reference signal receiving power (RSRP), reference signal receiving quality (RSRQ), and signal to interference plus noise ratio (SINR).

In some embodiments, the first AI capability includes at least one of the following:
an AI capability that can be used in the frequency band or the frequency band combination among the second AI capabilities;
an AI capability that can be used in the usage scenario among the second AI capabilities;
an AI capability matching the meta information among the second AI capabilities; and
an AI capability satisfying the working condition among the second AI capabilities.

In some embodiments, the first AI capability includes a first AI model or a first AI functionality; the second AI capability includes a second AI model or a second AI functionality.

In some embodiments, the second information includes a capability identifier of the first AI capability, and the capability identifier includes a model identifier or a functionality identifier.

In some embodiments of the present disclosure, an information transmission method is provided, and the method may include at least one of the following embodiments.

In a first embodiment, a terminal device may receive first information sent by a network device, where the first information is used to determine an AI capability that needs to be reported. The terminal device may send second information to the network device according to the first information, where the second information may carry an AI capability determined according to the first information.

The AI capability may include an AI model identifier supported by the terminal device or an AI functionality identifier supported by the terminal device.

The second embodiment is based on the first embodiment, and the first information may include any one of the following:
a frequency band or a frequency band combination;
a usage scenario including beam management, time-domain beam prediction, spatial-domain beam prediction, CSI compression, positioning, mobility management, selecting a target cell for handover, predicting handover failure, predicting a spatial-domain cell measurement result, and predicting a time-domain cell measurement result;

AI model meta information including prediction accuracy (e.g., 98%), a computation amount for model running (e.g., indicated by FLOPS), a storage space required for model running (e.g., indicated by KB), a model identifier, and a model provider (indicated by a provider ID); and
a working condition indicated by a network deployment mode, a UE moving speed, or an RSRP threshold.

The third embodiment is based on the first embodiment or the second embodiment, the terminal device may determine, according to the first information, that the reported AI capability includes a supported AI model or AI functionality. The terminal device may determine, according to a frequency band or a frequency band combination, that the AI model/functionality is an AI model or functionality applicable to a certain frequency band. The terminal device may determine, according to a usage scenario, that the AI model/functionality is an AI model or functionality applicable to a certain application scenario. The terminal device may determine, according to model meta information, that the AI model is an AI model matching the meta information.

The fourth embodiment is based on the first embodiment, and the terminal device determines that the reported AI capability is an AI model or AI functionality satisfying a working condition.

The fifth embodiment is based on the third embodiment or the fourth embodiment, and the terminal device reports an identifier of an AI model or AI functionality.

In some embodiments of the present disclosure, a communication system is provided, including a terminal device and a network device, where the terminal device may perform the information transmission method performed by the terminal device in the foregoing embodiments of the present disclosure; and the network device may perform the information transmission method performed by the network device in the foregoing embodiments of the present disclosure.

The embodiments of the present disclosure further provide an apparatus for implementing any one of the above methods. For example, an apparatus is provided, including units or modules configured to implement steps performed by a terminal in any one of the above methods. For another example, another apparatus is provided, including units or modules configured to implement steps performed by a network device (e.g., an access network device, a core network function node, a core network device, etc.) in any one of the above methods.

It should be understood that the division of each unit in the above apparatus is merely a division of logical functions. In actual implementation, all or part of the units may be integrated into a single physical entity, or they may be physically separated. In addition, the units in the apparatus may be implemented in the form of a processor invoking software. For example, the apparatus includes a processor, which is connected to a memory, the memory stores computer instructions, and the processor invokes the computer instructions stored in the memory to implement any one of the above methods or the functions of each unit of the above apparatus. The processor is, for example, a general-purpose processor such as a central processing unit (CPU) or a microprocessor, and the memory is a memory inside the apparatus or a memory outside the apparatus. Alternatively, the units in the apparatus may be implemented in the form of hardware circuits, and the functions of some or all units may be realized through the design of hardware circuits. The above hardware circuits may be understood as one or more processors. For example, in one implementation, the above hardware circuit is an application-specific integrated circuit (ASIC), and the functions of some or all of the above units are realized through the design of the logical relationships of components in the circuit. For another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured through configuration files, thereby realizing the functions of some or all of the above units. All units of the above apparatus may be entirely implemented in the form of the processor invoking software, or entirely in the form of hardware circuits, or part of the units in the form of the processor invoking software and the remaining part in the form of hardware circuits.

In the embodiments of the present disclosure, a processor is a type of circuit with signal processing capability. In one implementation, the processor may be a circuit capable of reading and executing instructions, such as a central processing unit (CPU), a microprocessor, a graphics processing unit (GPU) (which can be understood as a type of microprocessor), or a digital signal processor (DSP), etc. In another implementation, the processor may realize certain functions through the logical relationships of a hardware circuit, where the logical relationships of the aforementioned hardware circuit are either fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, the process in which the processor loads a configuration file to realize the configuration of the hardware circuit can be understood as the process in which the processor loads instructions to realize the functions of some or all of the aforementioned units. In addition, the processor may also be a hardware circuit designed for artificial intelligence, which can be understood as a type of ASIC, such as a neural network processing unit (NPU), a tensor processing unit (TPU), or a deep learning processing unit (DPU), etc.

FIG. 5A is a schematic structural diagram of a terminal device provided in an embodiment of the present disclosure. As shown in FIG. 5A, the terminal device 101 may include at least one of a transceiver module 5101, a processing module 5102, etc. In some embodiments, the transceiver module 5101 is configured to receive first information sent by a network device, where the first information is used for the terminal device to determine a first artificial intelligence (AI) capability that needs to be reported; the processing module 5102 is configured to determine the first AI capability from second AI capabilities supported by the terminal device according to the first information; and the transceiver module 5101 is further configured to send second information to the network device, where the second information is used to indicate the first AI capability of the terminal device. Optionally, the transceiver module 5101 may be configured to perform at least one of the sending and/or receiving communication steps (such as step S2101, step S2103, but not limited thereto) performed by the terminal device 101 in any of the above methods, which is not repeated herein. Optionally, the processing module 5102 may be configured to perform at least one of the other steps (such as step S2102, but not limited thereto) performed by the terminal device 101 in any of the above methods, which is not repeated herein.

In some embodiments, the transceiver module may include a transmitting module and/or a receiving module, and the transmitting module and the receiving module may be separate or integrated together. Optionally, the transceiver module may be interchangeable with a transceiver.

FIG. 5B is a schematic structural diagram of a network device provided in an embodiment of the present disclosure. As shown in FIG. 5B, the network device 102 may include at least one of a transceiver module 5201, a processing module 5202, etc. In some embodiments, the transceiver module 5201 is configured to send first information to a terminal device, where the first information is used by the terminal device to determine a first artificial intelligence (AI) capability that needs to be reported; the transceiver module 5201 is further configured to receive second information sent by the terminal device, where the second information is used to indicate the first AI capability of the terminal device, and the first AI capability includes an AI capability determined by the terminal device from second AI capabilities supported by the terminal device according to the first information. Optionally, the transceiver module 5201 may be configured to perform at least one of the sending and/or receiving communication steps (such as step S2101, step S2103, but not limited thereto) performed by the network device 102 in any of the above methods, which is not repeated herein.

In some embodiments, the transceiver module may include a transmitting module and/or a receiving module, and the transmitting module and the receiving module may be separate or integrated together. Optionally, the transceiver module may be interchangeable with a transceiver.

In some embodiments, the processing module may be a single module or may include multiple sub-modules. Optionally, the multiple sub-modules respectively perform all or part of the steps to be performed by the processing module. Optionally, the processing module may be interchangeable with a processor.

FIG. 6A is a schematic structural diagram of a communication device 6100 provided in an embodiment of the present disclosure. The communication device 6100 may be a network device (such as an access network device, a core network device, etc.), a terminal (such as user equipment, etc.), a chip, a chip system, or a processor that supports a first device to implement any of the above methods, or a chip, a chip system, or a processor that supports a terminal to implement any of the above methods. The communication device 6100 may be configured to implement the methods described in the foregoing method embodiments, and reference may be made to the descriptions in the foregoing method embodiments for details.

As shown in FIG. 6A, the communication device 6100 includes one or more processors 6101. The processor 6101 may be a general-purpose processor, a dedicated processor, or the like, for example, a baseband processor or a central processing unit. The baseband processor may be configured to process communication protocols and communication data, and the central processing unit may be configured to control a communication apparatus (such as a base station, a baseband chip, an Internet of Things device, an Internet of Things device chip, a DU, a CU, etc.), execute programs, and process program data. The communication device 6100 is configured to perform any of the above methods.

In some embodiments, the communication device 6100 further includes one or more memories 6102 configured to store instructions. Optionally, all or part of the memories 6102 may also be located outside the communication device 6100.

In some embodiments, the communication device 6100 further includes one or more transceivers 6103. When the communication device 6100 includes one or more transceivers 6103, the transceiver 6103 performs at least one of the communication steps such as sending and/or receiving in the above method (for example, step S2101, step S4101, but not limited thereto), and the processor 6101 performs at least one of the other steps (for example, step S2102, but not limited thereto).

In some embodiments, the transceiver may include a receiver and/or a transmitter, and the receiver and the transmitter may be separate or integrated together. Optionally, terms such as transceiver, transceiver unit, transceiver, transceiver circuit may be used interchangeably, terms such as transmitter, transmission unit, transmitter, transmission circuit may be used interchangeably, and terms such as receiver, reception unit, receiver, reception circuit may be used interchangeably.

In some embodiments, the communication device 6100 may include one or more interface circuits. Optionally, the interface circuit is connected to the memory 6102. The interface circuit may be configured to receive signals from the memory 6102 or other devices, and may be configured to send signals to the memory 6102 or other devices. For example, the interface circuit may read instructions stored in the memory 6102 and send the instructions to the processor 6101.

The communication device 6100 in the above embodiments may be a first device or an Internet of Things (IoT) device, but the scope of the communication device 6100 described in the present disclosure is not limited thereto, and the structure of the communication device 6100 may not be limited by FIG. 6A. The communication device may be a standalone device or a part of a larger device. For example, the communication device may be: (1) a standalone integrated circuit (IC), or chip, or chip system or subsystem; (2) a collection of one or more ICs, optionally, the above IC collection may also include storage components for storing data and computer programs; (3) an ASIC, such as a Modem; (4) a module that can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) others, etc.

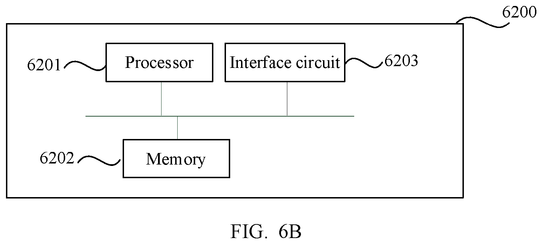

FIG. 6B is a schematic structural diagram of a chip 6200 provided in an embodiment of the present disclosure. For the case where the communication device 6100 may be a chip or a chip system, reference may be made to the schematic structural diagram of the chip 6200 shown in FIG. 6B, but is not limited thereto.

The chip 6200 includes one or more processors 6201, and the chip 6200 is configured to perform any of the above methods.

In some embodiments, the chip 6200 further includes one or more interface circuits 6203. Optionally, the interface circuit 6203 is connected to a memory 6202. The interface circuit 6203 may be configured to receive signals from the memory 6202 or other devices, and may be configured to send signals to the memory 6202 or other devices. For example, the interface circuit 6203 may read instructions stored in the memory 6202 and send the instructions to the processor 6201.

In some embodiments, the interface circuit 6203 performs at least one of the communication steps such as sending and/or receiving in the above methods (e.g., step S2101, step S4101, but not limited thereto), and the processor 6201 performs at least one of the other steps (e.g., step S2102, but not limited thereto).

In some embodiments, terms such as interface circuit, interface, transmit/receive pin, and transceiver may be used interchangeably.

In some embodiments, the chip 6200 further includes one or more memories 6202 for storing instructions. Optionally, all or part of the memories 6202 may be located outside the chip 6200.

An embodiment of the present disclosure further provides a storage medium having instructions stored thereon, which, when run on the communication device 6100, cause the communication device 6100 to perform any of the above methods. Optionally, the storage medium is an electronic storage medium. Optionally, the storage medium is a computer-readable storage medium, but is not limited thereto, and may also be a storage medium readable by other apparatuses. Optionally, the storage medium may be a non-transitory storage medium, but is not limited thereto, and may also be a transitory storage medium.

An embodiment of the present disclosure further provides a program product which, when executed by the communication device 6100, causes the communication device 6100 to perform any of the above methods. Optionally, the program product may be a computer program product.

An embodiment of the present disclosure further provides a computer program which, when run on a computer, causes the computer to perform any of the above methods.

## Claims

1. An information transmission method, comprising:
receiving first information sent by a network device, wherein the first information is used for a terminal device to determine a first artificial intelligence (AI) capability that needs to be reported;
determining the first AI capability from second AI capabilities supported by the terminal device according to the first information; and
sending second information to the network device, wherein the second information is used to indicate the first AI capability of the terminal device.

2. The method according to claim 1, wherein the first information comprises at least one of:
a frequency band or a frequency band combination;
a usage scenario;
meta information; and
a working condition.

3. The method according to claim 2, wherein the usage scenario comprises at least one of:
beam management, time-domain beam prediction, spatial-domain beam prediction, channel state information (CSI) compression, positioning, mobility management, selecting a target cell for handover, predicting handover failure, predicting a spatial-domain cell measurement result, and predicting a time-domain cell measurement result.

4. The method according to claim 2 or 3, wherein the meta information comprises at least one of:
prediction accuracy, a computation amount for running an AI capability, a storage space required for running an AI capability, a capability identifier of an AI capability, and a provider of an AI capability.

5. The method according to any one of claims 2 to 4, wherein the working condition comprises at least one of:
a network deployment mode;
a moving speed; and
a radio channel measurement result satisfying a first condition.

6. The method according to claim 5, wherein the radio channel measurement result comprises at least one of: reference signal receiving power (RSRP), reference signal receiving quality (RSRQ), and signal to interference plus noise ratio (SINR).

7. The method according to any one of claims 2 to 6, wherein the first AI capability comprises at least one of:
an AI capability usable in the frequency band or the frequency band combination among the second AI capabilities;
an AI capability usable in the usage scenario among the second AI capabilities;
an AI capability matching the meta information among the second AI capabilities; and
an AI capability satisfying the working condition among the second AI capabilities.

8. The method according to any one of claims 1 to 7, wherein
the first AI capability comprises a first AI model or a first AI functionality; and
the second AI capability comprises a second AI model or a second AI functionality.

9. The method according to any one of claims 1 to 8, wherein
the second information comprises a capability identifier of the first AI capability, and the capability identifier comprises a model identifier or a functionality identifier.

10. An information transmission method, comprising:
sending first information to a terminal device, wherein the first information is used for the terminal device to determine a first artificial intelligence (AI) capability that needs to be reported; and
receiving second information sent by the terminal device, wherein the second information is used to indicate the first AI capability of the terminal device, and the first AI capability comprises an AI capability determined by the terminal device from second AI capabilities supported by the terminal device according to the first information.

11. The method according to claim 10, wherein the first information comprises at least one of:
a frequency band or a frequency band combination;
a usage scenario;
meta information; and
a working condition.

12. The method according to claim 11, wherein the usage scenario comprises at least one of:
beam management, time-domain beam prediction, spatial-domain beam prediction, channel state information (CSI) compression, positioning, mobility management, selecting a target cell for handover, predicting handover failure, predicting a spatial-domain cell measurement result, and predicting a time-domain cell measurement result.

13. The method according to claim 11 or 12, wherein the meta information comprises at least one of:
prediction accuracy, a computation amount for running an AI capability, a storage space required for running an AI capability, a capability identifier of an AI capability, and a provider of an AI capability.

14. The method according to any one of claims 11 to 13, wherein the working condition comprises at least one of:
a network deployment mode;
a moving speed; and
a radio channel measurement result satisfying a first condition.

15. The method according to claim 14, wherein the radio channel measurement result comprises at least one of: reference signal receiving power (RSRP), reference signal receiving quality (RSRQ), and signal to interference plus noise ratio (SINR).

16. The method according to any one of claims 11 to 15, wherein the first AI capability comprises at least one of:
an AI capability usable in the frequency band or the frequency band combination among the second AI capabilities;
an AI capability usable in the usage scenario among the second AI capabilities;
an AI capability matching the meta information among the second AI capabilities; and
an AI capability satisfying the working condition among the second AI capabilities.

17. The method according to any one of claims 10 to 16, wherein
the first AI capability comprises a first AI model or a first AI functionality; and
the second AI capability comprises a second AI model or a second AI functionality.

18. The method according to any one of claims 10 to 17, wherein
the second information comprises a capability identifier of the first AI capability, and the capability identifier comprises a model identifier or a functionality identifier.

19. A terminal device, comprising:
a transceiver module, configured to receive first information sent by a network device, wherein the first information is used for a terminal device to determine a first artificial intelligence (AI) capability that needs to be reported; and
a processing module, configured to determine the first AI capability from second AI capabilities supported by the terminal device according to the first information;
wherein the transceiver module is further configured to send second information to the network device, wherein the second information is used to indicate the first AI capability of the terminal device.

20. A network device, comprising:
a transceiver module, configured to send first information to a terminal device, wherein the first information is used for the terminal device to determine a first artificial intelligence (AI) capability that needs to be reported;
wherein the transceiver module is further configured to receive second information sent by the terminal device, wherein the second information is used to indicate the first AI capability of the terminal device, and the first AI capability comprises an AI capability determined by the terminal device from second AI capabilities supported by the terminal device according to the first information.

21. A communication device, comprising:
one or more processors;
wherein the communication device is configured to perform the information transmission method according to any one of claims 1 to 9 or claims 10 to 18.

22. A storage medium, wherein the storage medium stores instructions, wherein the instructions, when run on a communication device, cause the communication device to perform the information transmission method according to any one of claims 1 to 9 or claims 10 to 18.
